# EUROPÄISCHE PATENTSCHRIFT

(11) **EP 0 733 512 B1**
(45) Veröffentlichungstag und Bekanntmachung des Hinweises auf die Patenterteilung: **21.04.1999**
(21) Anmeldenummer: 96101878.5
(22) Anmeldetag: 09.02.1996
(51) Int. Cl.: B60R 7/04

(54) **Behälter, wie Ascher, Ablagefach oder dgl. insbesondere für Fahrzeuge**
Receptacle, e.g. ashtray, glove compartment or similar, particularly for vehicles
Réceptacle, p.e. cendrier, boîte à gants ou similaire, en particulier pour véhicules

(30) Priorität: 24.03.1995 DE 19510749
(43) Veröffentlichungstag der Anmeldung: 25.09.1996
(73) Patentinhaber: Johnson Controls Interiors GmbH, 42285 Wuppertal (DE); DaimlerChrysler AG, 70567 Stuttgart (DE)
(72) Erfinder: Sigloch, Andreas, 71034 Dagersheim (DE); Körber, Jürgen, D-7165 Sindelfingen (DE); Wegel, Peter, D-42283 Wuppertal (DE); Dabringhaus, Volker, D-42109 Wuppertal (DE)

(56) Entgegenhaltungen:
- DE-A- 4 218 445

## Beschreibung

Die Erfindung bezieht sich auf einen Behälter, wie Ascher, Ablagefach oder dgl., insbesondere für Fahrzeuge der im Oberbegriff des Patentanspruchs 1 näher angegebenen Art.

Bei einem durch die DE 42 18 445 A1 bekannt gewordenen Behälter der gattungsgemäßen Art ist, um den gesamt benötigten Einbauraum relativ eng dimensionieren zu können, vorgesehen, daß der Deckel derart am Behälter schwenkbar gelagert ist, daß der Drehbewegung eine translatorische Bewegung überlagert ist, wobei die parallel zur Schwenkachse verlaufenden Randkanten des Deckels bei Bewegung aus der Schließ- in die Offenlage und zurück eine Bewegungsbahn etwa in Form einer Trochoidbahn durchlaufen. Auch soll sich die Schwenkachse des Deckels bei der Verschwenkung aus der Schließ- in die Offenlage auf einer translatorisch verschiebenden Kreisbahn bewegen. Die praktische Verwirklichungsform des Behälters nach der DE 42 18 445 A1 sieht vor, die Schwenkachsen durch Kurbeln nebst Kurbelzapfen zu bilden und zwecks Sicherstellung, daß die Bewegung des Deckels zwangsläufig ausschließlich auf der gewünschten Bewegungsbahn abläuft, in Zwangseingriff miteinander gehaltene Zahnsegmente einzusetzen. Der Aufbau des bekannten Behälters erscheint relativ aufwendig und störanfällig und verlangt zudem den Einsatz einer Vielzahl recht komplizierter Einzelteile.

Der Erfindung liegt nun ausgehend von einem Behälter der eingangs genannten Art die Aufgabe zugrunde, eine Deckelanordnung am Behälter aufzuzeigen, die einen nur relativ engen Raum zwischen der Kopfwand des Gehäuses und der dieser benachbarten Wand der Einbauöffnung benötigt, einfach und kostengünstig zu realisieren ist, nur weniger Einzelteile bedarf und insbesondere auch robust und nicht störungsanfällig ist.

Zur Lösung dieser Aufgabe sind erfindungsgemäß die im kennzeichnenden Teil des Patentanspruchs 1 angegebenen Merkmale vorgesehen.

Die Erfindung sieht danach vor, daß der Deckel von zwei Hebeln getragen wird, die einendig über Gelenkzapfen an den Seitenwänden des Gehäuses und anderendig an den Schenkeln des Deckels ebenfalls über Gelenkzapfen angelenkt sind, wobei sich die Anlenkung der Hebel am Deckel in der Nähe der Vorderkante der Deckelplatte befindet. Werden nun die Hebel um ihre Gelenkzapfen nach links oder rechts verschwenkt, erfolgt eine entsprechende Mitnahme des Deckels, wobei die vordere Randkante der Deckelplatte eine kreisbogenförmige Bewegungsbahn durchläuft. Eine kontrollierte, im wesentlichen geradlinige Bewegungsbahn für die hintere Randkante der Deckelplatte wird in einfacher Weise durch in den Seitenwänden des Gehäuses ausgebildeten Kulissennuten mit darin geführt eingreifenden Führungszapfen, die an den Schenkeln des Deckels angeordnet sind, in Verbindung mit der Anlenkung des Deckels an den freien Hebelenden realisiert.

Um den Bedienungskomfort des Behälters zu erhöhen, ist in Weiterbildung der Erfindung vorgesehen, daß der Deckel gegen die Kraft zumindest einer Öffnungsfeder in die Schließlage bewegbar und in der Schließlage durch zumindest eine leicht lösbare Verriegelungseinrichtung gehalten ist. Insoweit macht die Erfindung von einer bei Aschern für Fahrzeuge in den letzten Jahren gebräuchlich gewordenen Tippautomatik Gebrauch, wobei die Verriegelungseinrichtung durch leichtes Andrücken des Deckels gelöst und der Deckel sodann durch die Kraft der zumindest einen daran angreifenden Feder automatisch in die Offenlage überführt wird.

Zur kostengünstigen Herstellung des Behälters und zur Einsparung von Einzelteilen trägt bei, daß gemäß einer Weiterbildung der Erfindung mindestens einer der den Deckel tragenden Hebel mit zur Verriegelungseinrichtung gehörenden Steuerkurven ausgebildet ist.

In weiterer Ausgestaltung der Erfindung ist zumindest einer der den Deckel tragenden Hebel zur Bodenwand des Gehäuses hin verlängert zwecks Anordnung einer Bremse, die mit einem Ritzel ausgerüstet ist, das mit einem an zumindest einer Seitenwand des Gehäuses angeordneten Zahnsegment kämmt. Die Anordnung zumindest einer Bremse empfiehlt sich, um die Öffnungsgeschwindigkeit einstellbar zu gestalten und ein hartes Anschlagen des durch eine Öffnungsfeder in die Offenlage zu überführenden Deckels zu verhindern.

Ein Ausführungsbeispiel der Erfindung wird nachfolgend anhand der Zeichnungen näher erläutert, und es zeigen:
- Fig. 1: eine Ansicht auf eine Seitenwand des Behälters mit Deckel in Offenlage und
- Fig. 2: die Ansicht nach Fig. 1 mit dem Bewegungsablauf des Deckels.

Ein kastenförmiges Gehäuse 1 mit einer Vorderwand 2, einer Rückwand 3, einer Bodenwand 4, einer Kopfwand 5 und zwei Seitenwänden 6 weist eine Gehäuseöffnung 7 auf, die mittels eines öffenbaren Deckels 8 verschließbar ist. Die Gehäuseöffnung 7 erstreckt sich zwischen den Seitenwänden 6 und wird zudem von der oberen Randkante 9 der gegenüber der Rückwand 3 in der Höhe reduzierten Vorderwand 2 vorderseitig und der vorderen Randkante (etwa bei 10) der gegenüber der Bodenwand verkürzten Kopfwand 5 des Gehäuses 1 hinterseitig begrenzt. In das Gehäuse 1 kann durch die Gehäuseöffnung 7 hindurch eine Schale (nicht gezeigt) eingesetzt werden. Auch kann sich im Gehäuseinnern ein Zigarettenanzünder oder ähnliches befinden.

Der Behälter ist in eine Einbauöffnung im Innenraum eines Fahrzeugs, die zum Beispiel in einer Armaturentafel oder einer Konsole ausgebildet ist, einsetzbar. Wegen sich am Behälter nach oben anschließender Bauteile 11 ist die Einbauöffnung nach oben hin begrenzt, so daß nur ein enger Raum 12 zwischen der Kopfwand 5 des Gehäuses 1 und der dieser benachbarten Wand 13 der Einbauöffnung verbleibt, in dem der Deckel 8 in der geöffneten Lage unterzubringen ist. Der Deckel 8 muß zur Überführung in die Schließlage aus dem engen Raum 12 herausgeführt werden, was besonderer Mittel bedarf.

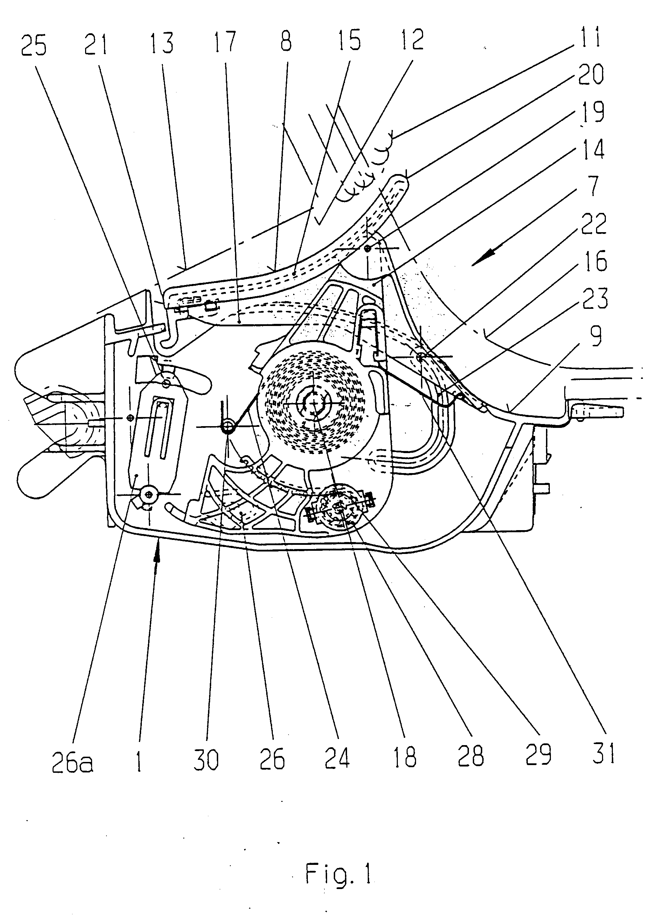

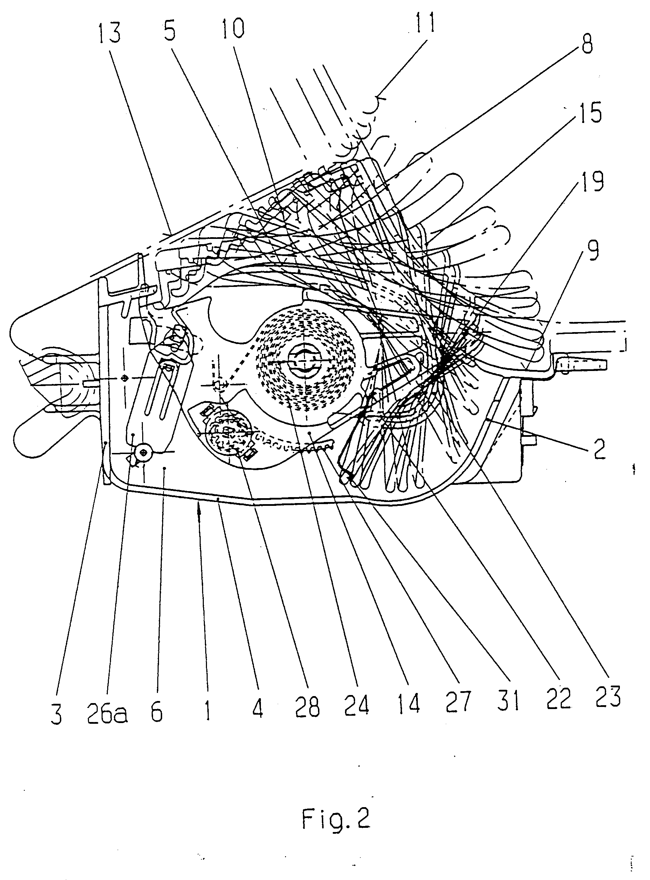

Die Anordnung des Deckels 8 am Gehäuse 1 erfolgt im wesentlichen über zwei Hebel 14, von denen einer an der ersten und der andere an der zweiten Seitenwand 6 angelenkt ist. Zunächst soll aber erwähnt sein, daß der Deckel 8 aus einer Deckelplatte 15, die entsprechend der Anschlußkontur 16 konkav ist, und an den Stirnenden der Deckelplatte 15 senkrecht nach unten abstehend angeordneten, die Seitenwände 6 des Gehäuses 1 übergreifenden Schenkeln 17 besteht. Jeder der Hebel 14 ist nun mit seinem unteren Endbereich über einen einen Drehpunkt für den Hebel 14 bildenden Gelenkzapfen 18 an der zugehörigen Seitenwand 6 des Gehäuses 1 angelenkt. Ferner ist jeder der Hebel 14 mit dem oberen Endbereich jeweils über einen Gelenkzapfen 19 an einem der Schenkel 17 des Deckels 8 angelenkt. Die beiden Anlenkpunkte der miteinander fluchtenden Gelenkzapfen 19 befinden sich in der Nähe der vorderen Randkante 20 des Deckels 8. Bewegt man den Hebel 14 aus seiner Stellung nach Fig. 1 nach rechts bis in eine Stellung nach Fig. 2, so durchlaufen der Gelenkzapfen 19 wie auch die vordere Randkante 20 eine kreisbogenförmige Bewegungsbahn mit dem Gelenkzapfen 8 als Drehpunkt. Aufgrund der Anlenkung des Deckels 8 an den Hebeln 14 mittels der Gelenkzapfen 19, macht die hintere Randkante 21 der Deckelplatte 15 die kreisförmige Bewegung nicht mit, sondern vermag sich im wesentlichen geradlinig aus dem engen Raum 12 der Einbauöffnung heraus zu bewegen. Um insoweit eine Zwangsführung zu erreichen, weisen die Schenkel 17 Führungszapfen 22 auf, die in in den Seitenwänden 6 des Gehäuses 1 ausgebildeten Kulissennuten 23 eingreifen. Die Kurvenform der Kulissennuten 23 ist so ausgelegt, daß sich die hintere Randkante 21 der Deckelplatte 15 auf einer im wesentlichen geradlinigen Bahn bewegt, wie dies Fig. 2, die den Bewegungsablauf des Deckels 8 zeigt, verdeutlicht.

Der Deckel 8 wird in seiner Schließlage durch eine Verriegelungseinrichtung gegen die Kraft einer zum selbsttätigen Öffnen des Deckels 8 vorgesehenen Öffnungsfeder 24 gehalten. Die Steuerkurven 26, in denen der Rastnocken 25 eines Schwenkhebels 26a geführt ist, sind zweckmäßigerweise an den Hebeln 14 ausgebildet, was besonders dann von Vorteil ist, wenn die Hebel 14, wie es bevorzugt vorgesehen ist, aus Kunststoff-Spritzgußteilen bestehen, was auch für die anderen wesentlichen Bestandteile des Behälters gilt. Es sei erwähnt, daß die Anlenkung des Deckels 8 an beiden Seitenwänden 6 des Gehäuses 1 gleich sein sollte, um eine gleichmäßige, verkantungsfreie Führung zu gewährleisten, so daß auch an beiden Gehäuseseiten eine Verriegelungseinrichtung, eine Öffnungsfeder 24 und ein mit einem Zahnsegment 27 zusammenwirkendes Ritzel 29 einer Bremse 28 angeordnet ist. Für die Befestigung der Bremsen 28 sind die Hebel 14 zur Bodenwand 4 des Gehäuses 1 hin verlängert. Die Zahnsegmente 27 sind an den Seitenwänden 6 angeformt.

Der Deckel 8 kann durch leichte Druckausübung in Pfeilrichtung x geöffnet werden. Durch eine solche Druckausübung gibt die Verriegelungseinrichtung den Rastnocken 25 frei, so daß die Öffnungsfeder 24, die beim Schließen des Deckels 8 gespannt wird, den Deckel 8 in die Schließlage überführen kann. Die Verriegelungseinrichtung gehört zum Stand der Technik, so daß insoweit auf eine nähere Erläuterung verzichtet wird. Bei den Öffnungsfedern 24 handelt es sich bevorzugt um Wickelfedern, die an den Hebeln 14 angeordnet sind und einendig jeweils einen Zapfen 30 an den Seitenwänden 6 des Gehäuses 1 umgreifen.

An dem Deckel 8 mit einem Federarm angreifende und an den Hebeln 14 befestigte Federn 31 geben dem Deckel 8 nach dem Lösen der Verriegelungseinrichtung einen Öffnungsimpuls, sind im wesentlichen aber zum Toleranzausgleich und zur wackelfreien Anordnung des Deckels 8 am Gehäuse 1 vorgesehen.

## Patentansprüche

1. Behälter, wie Ascher, Ablagefach oder dgl., insbesondere für Fahrzeuge, mit einem in eine Einbauöffnung im Innenraum eines Fahrzeugs einsetzbaren kastenförmigen Gehäuse (1) mit einer Gehäuseöffnung (7), die sich zwischen den Seitenwänden (6) des Gehäuses (1) erstreckt und zudem von der oberen Randkante (9) der gegenüber der Rückwand (3) in der Höhe reduzierten Vorderwand (2) vorderseitig und mit der vorderen Randkante (10) der gegenüber der Bodenwand (4) verkürzten Kopfwand (5) des Gehäuses (1) hinterseitig begrenzt ist, mit einem Deckel (8), bestehend aus einer Deckelplatte (15) und an deren Stirnenden senkrecht abstehend angeordneten, die Seitenwände (6) des Gehäuses (1) übergreifenden Schenkeln (17) und mit Führungsmitteln zum Bewegen des Deckels (8) aus einer geöffneten Lage, in der die Deckelplatte (15) sich in einem engen Raum (12) zwischen der Kopfwand (5) des Gehäuses (1) und der dieser benachbarten Wand (13) der Einbauöffnung befindet, in eine Schließlage, in der die Deckelplatte (15) die Gehäuseöffnung (7) abdeckt, wobei die Deckelplatte (15) bei der Überführung aus der geöffneten in die Schließlage wie auch umgekehrt mit der Vorderkante (20) einer im wesentlichen kreisbogenförmigen und mit der Hinterkante (21) einer im wesentlichen geradlinigen Bewegungsbahn folgt, dadurch gekennzeichnet, daß für das Bewegen des Deckels (8) erste Führungsmittel, bestehend aus an den Seitenwänden (6) des Gehäuses (1) schwenkbeweglich angelenkten Hebeln (14), deren freie Endbereiche über Gelenkzapfen (19) mit den Schenkeln (17) des Deckels (8) verbunden sind und zweite Führungsmittel, bestehend aus in den Seitenwänden (6) des Gehäuses (1) ausgebildeten Kulissennuten (23) und darin eingreifenden, an den Schenkeln (17) des Deckels (8) angeordneten Führungszapfen (22), vorgesehen sind, wobei sowohl die Gelenkzapfen (19) als auch die Führungszapfen (22) der vorderen Randkante (20) der Deckelplatte (15), zu der sie parallel verlaufen, wesentlich näher benachbart sind als der hinteren Randkante (21) der Deckelplatte (15).

2. Behälter nach Anspruch 1, dadurch gekennzeichnet, daß der Deckel (8) gegen die Kraft zumindest einer Öffnungsfeder (24) in die Schließlage bewegbar und in der Schließlage durch zumindest eine leicht lösbare Verriegelungseinrichtung gehalten ist.

3. Behälter nach Anspruch 1 oder 2, dadurch gekennzeichnet, daß mindestens einer der den Deckel (8) tragenden Hebel (14) mit zur Verriegelungseinrichtung gehörenden Steuerkurven (26) ausgebildet ist.

4. Behälter nach wenigstens einem der Ansprüche 1 bis 3, dadurch gekennzeichnet, daß zumindest einer der den Deckel (8) tragenden Hebel (14) zur Bodenwand (4) des Gehäuses (1) hin verlängert ist zwecks Anordnung einer Bremse (28), die mit einem Ritzel (29) ausgerüstet ist, das mit einem an zumindest einer Seitenwand (6) des Gehäuses (1) angeordneten Zahnsegmente (27) kämmt.

## Claims

1. Container, such as ashtray, stowage compartment or the like, in particular for vehicles, having a box-like housing (1) which can be inserted into an installation opening in the interior of a vehicle and has a housing opening (7) which extends between the side walls (6) of the housing (1) and, in addition, is delimited on the front side by the top border edge (9) of the front wall (2), which has a reduced height with respect to the rear wall (3), and on the rear side by the front border edge (10) of the top wall (5) of the housing (1), said top wall being shorter than the base wall (4), having a cover (8) comprising a cover panel (15) and legs (17), which project vertically from the ends of said cover panel and engage over the side walls (6) of the housing (1), and having guide means for moving the cover (8) out of an open position, in which the cover panel (15) is located in a narrow space (12) between the top wall (5) of the housing (1) and the installation-opening wall (13), which is adjacent to said top wall, into a closed position, in which the cover panel (15) covers the housing opening (7), it being the case that, when transferred from the open position into the closed position and vice versa, the cover panel (15) has its front edge (20) following an essentially circle-arc-shaped movement path and its rear edge (21) following an essentially rectilinear movement path, characterized in that for the movement of the cover (8) there are provided first guide means, comprising levers (14), which are articulated pivotably on the side walls (6) of the housing (1) and of which the free end regions are connected to the legs (17) of the cover (8) via articulation pins (19), and second guide means, comprising guide grooves (23), which are formed in the side walls (6) of the housing (1), and guide pins (22), which engage in said guide grooves and are arranged on the legs (17) of the cover (8), it being the case that both the articulation pins (19) and the guide pins (22) are considerably closer to the front border edge (20) of the cover panel (15), to which they are parallel, than to the rear edge (21) of the cover panel (15).

2. Container according to Claim 1, characterized in that the cover (8) can be moved into the closed position counter to the force of at least one opening spring (24) and is retained in the closed position by at least one easily releasable locking device.

3. Container according to Claim 1 or 2, characterized in that at least one of the levers (14), which bear the cover (8), is designed with control cams (26) belonging to the locking device.

4. Container according to at least one of Claims 1 to 3, characterized in that at least one of the levers (14), which bear the cover (8), is extended towards the base wall (4) of the housing (1) for the purpose of providing a brake (28) which is equipped with a pinion (29) and meshes with a toothed segment (27) arranged on at least one side wall (6) of the housing (1).

## Revendications

1. Réceptacle, par exemple cendrier, boîte à gants ou similaire, en particulier pour véhicules, avec un boîtier (1) en forme de cassette à introduire dans une ouverture de montage dans l'espace intérieur d'un véhicule, et présentant une ouverture de boîtier (7), qui s'étend entre les parois latérales (6) du boîtier (1) et qui est en plus délimitée vers l'avant par l'arête de bord supérieure (9) de la paroi avant (2) de hauteur réduite par rapport à la paroi arrière (3) et vers l'arrière par l'arête de bord antérieure (10) de la paroi supérieure (5) du boîtier (1) raccourcie par rapport à la paroi de fond (4), avec un couvercle (8), se composant d'une plaque de couvercle (15) et de flancs (17) disposés en position dressée verticalement aux extrémités de celle-ci et enserrant les parois latérales (6) du boitier (1), et avec des moyens de guidage pour le mouvement du couvercle (8) d'une position ouverte, dans laquelle la plaque de couvercle (15) se trouve dans un espace étroit (12) entre la paroi supérieure (5) du boîtier (1) et la paroi (13), voisine de celle-ci, de l'ouverture de montage, à une position fermée, dans laquelle la plaque de couvercle (15) recouvre l'ouverture de boîtier (7), la plaque de couvercle (15) suivant avec son arête antérieure (20) une trajectoire essentiellement en forme d'arc de cercle et avec son arête postérieure (21) une trajectoire essentiellement rectiligne lors du passage de la position ouverte à la position fermée et inversement, caractérisé en ce qu'il est prévu, pour le mouvement du couvercle (8), des premiers moyens de guidage, se composant de leviers (14) pivotants articulés aux parois latérales (6) du boîtier (1), dont les extrémités libres sont assemblées aux flancs (17) du couvercle (8) par des pivots (19), et des seconds moyens de guidage, se composant de rainures de glissement (23) formées dans les parois latérales (6) du boîtier (1) et de tourillons de guidage (22) s'engageant dans celles-ci et disposés sur les flancs (17) du couvercle (8), aussi bien les pivots (19) que les tourillons de guidage (22) étant nettement plus proches de l'arête de bord antérieure (20) de la plaque de couvercle (15), à laquelle ils sont parallèles, que de l'arête de bord postérieure (21) de la plaque de couvercle (15).

2. Réceptacle suivant la revendication 1, caractérisé en ce que le couvercle (8) peut être amené dans la position fermée contre la force d'au moins un ressort d'ouverture (24) et est maintenu dans la position fermée par au moins un dispositif de verrouillage à déverrouillage aisé.

3. Réceptacle suivant la revendication 1 ou 2, caractérisé en ce qu'au moins un des leviers (14) portant le couvercle (8) est muni de courbes de commande (26) faisant partie du dispositif de verrouillage.

4. Réceptacle suivant au moins une des revendications 1 à 3, caractérisé en ce qu'au moins un des leviers (14) portant le couvercle (8) est prolongé jusqu'à la paroi de fond (4) du boîtier (1) dans le but d'agencer un frein (28), qui est équipé d'un pignon (29), qui engrène avec un segment denté (27) disposé sur au moins une paroi latérale (6) du boîtier (1).
